# EUROPEAN PATENT APPLICATION

(11) **EP 4 205 939 A1**
(43) Date of publication of application: **05.07.2023**
(21) Application number: 22183037.5
(22) Date of filing: 05.07.2022
(51) Int. Cl.: B29C 43/36

(54) **FORMING DEVICE AND FORMING METHOD**

(30) Priority: 28.12.2021 JP 2021214533
(71) Applicant: Mitsubishi Heavy Industries, Ltd., Tokyo 100-8332 (JP)
(72) Inventor: OZAKI, Ryota, Chiyoda-ku, Tokyo, 100-8332 (JP); MATSUOKA, Jun, Chiyoda-ku, Tokyo, 100-8332 (JP); KANI, Yuki, Chiyoda-ku, Tokyo, 100-8332 (JP)
(74) Representative: Hoffmann Eitle

(57) **Abstract**

Provided are a forming device and a forming method that can achieve good quality of a shaped and pressed material. The embodiment includes: a die 110 having a concave part 111; and a punch 120 having a convex part 121 to be fitted into the concave part 111, the die 110 and the punch 120 can come close to and separate away from each other in the vertical direction, and the convex part 121 has a first movable punch 130 and a second movable punch 140 that come close to the concave part 111 in the lateral direction with the punch 120 and the die 110 being close to each other and the convex part 121 being fitted into the concave part 111.

## Description

### BACKGROUND

### 1. TECHNICAL FIELD

The present disclosure relates to a forming device and a forming method.

### 2. DESCRIPTION OF RELATED ART

For example, Japanese Patent Application Laid-Open No. 2017-113782 discloses a device for press-molding a hat-shaped member from a plate-like machined material such as a sheet steel material between a concave die and a convex punch.

Japanese Patent Application Laid-Open No. 2017-113782 is an example of the related art.

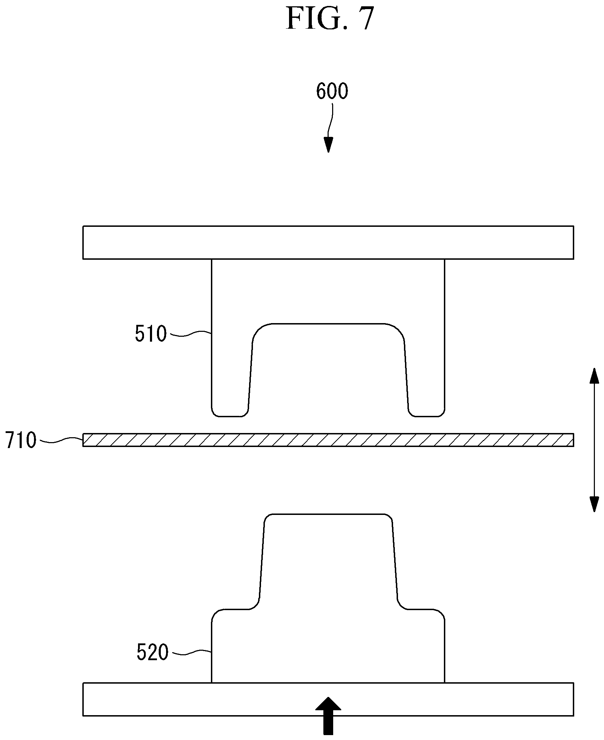

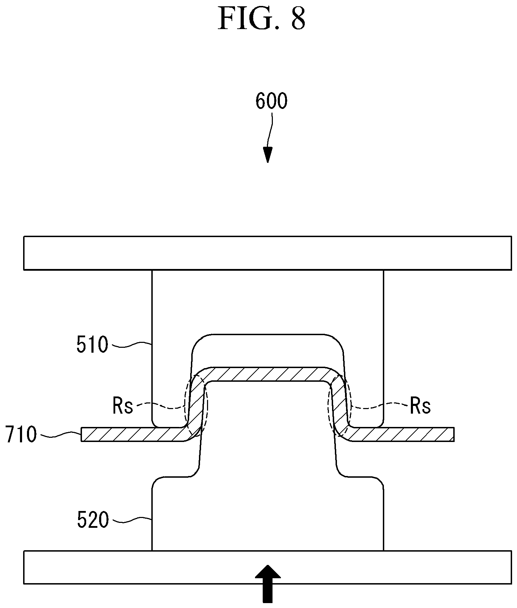

As illustrated in Fig. 7 and Fig. 8, for example, when a forming device 600 having a simple concave die 510 and a convex punch 520 is used to form a member from a material containing a resin, it is required that the dimension of a clearance between the die 510 and the punch 520 be substantially the same as the thickness of the final shape of the member (formed material) in a region Rs orthogonal to the movable direction of the die 510 and/or the punch 520 in a shaping step. Thus, a portion of a material 710 in the region Rs (a portion corresponding to a flange) may be subjected to shearing force and narrowed due to the flowability of the resin, thereby being thinned. Note that, an example of the resin may be a resin having flowability and flexibility at least during shaping, such as a thermoplastic resin or a thermosetting resin.

In contrast, a portion of the material 710 in a region in the movable direction of the die 510 and/or the punch 520 (a portion corresponding to a web) may be thickened because of inflow of fluidized resin in a shaping step.

In such a case, the resin may be unevenly distributed for respective portions of the shaped material 710, and the plate thickness may vary.

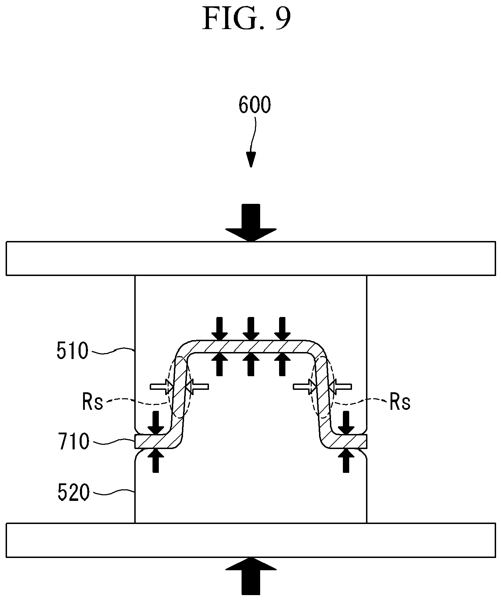

Consequently, as illustrated in Fig. 9, in a pressing step after the shaping step, the portion of the material 710 in the region Rs (the portion corresponding to the flange) is not sufficiently pressed, and therefore the resin will not be sufficiently densified. In such a case, the plate thickness or the resin content (content ratio of resin and fibers) may vary for respective portions of the pressed material (a member/a formed component), and this will result in reduced quality.

### BRIEF SUMMARY

The present disclosure has been made in view of such circumstances, and an object of the disclosure is to provide a forming device and a forming method that can achieve good quality of a material (a member/a formed component) after shaped and pressed.

To achieve the above object, the forming device and the forming method of the present disclosure employ the following solutions.

A forming device according to one aspect of the present disclosure is a forming device for forming a material containing a resin. The forming device includes: a die having a concave part; and a punch having a convex part to be fitted into the concave part, the die and the punch are configured to come close to and separate away from each other in a predetermined direction, and the convex part has a movable part configured to come close to the concave part in an orthogonal direction orthogonal to the predetermined direction with the punch and the die being close to each other and the convex part being fitted into the concave part.

Further, a forming method according to one aspect of the present disclosure is a forming method for forming a material containing a resin into a member having a predetermined sectional shape by using a forming device including a die having a concave part and a punch having a convex part to be fitted into the concave part, the die and the punch are configured to come close to and separate away from each other in a predetermined direction, and the convex part has a movable part configured to come close to the concave part in an orthogonal direction orthogonal to the predetermined direction. The forming method includes steps of: causing the punch and the die to come close to each other with the material being interposed between the punch and the die; and defining a predetermined clearance corresponding to the sectional shape between the concave part and the convex part by causing the movable part to come close to the concave part when the material reaches the bottom of the die.

According to the present disclosure, it is possible to achieve good quality of a material (a member/a formed component) after shaped and pressed.

### BRIEF DESCRIPTION OF THE SEVERAL VIEWS OF THE DRAWINGS

Fig. 1 is a front view before a material is shaped in a forming device according to one embodiment of the present disclosure.
Fig. 2 is a conceptual diagram illustrating a view of a convex part being deformed.
Fig. 3 is a front view when the material is shaped in the forming device according to one embodiment of the present disclosure.
Fig. 4 is a partial enlarged view near a first guide plate.
Fig. 5 is a front view when the material is pressed in the forming device according to one embodiment of the present disclosure.
Fig. 6 is a perspective view of a member.
Fig. 7 is a front view before a material is shaped in a forming device according to a conventional example.
Fig. 8 is a front view when the material is shaped in the forming device according to the conventional example.
Fig. 9 is a front view when the material is pressed in the forming device according to the conventional example.

### DETAILED DESCRIPTION

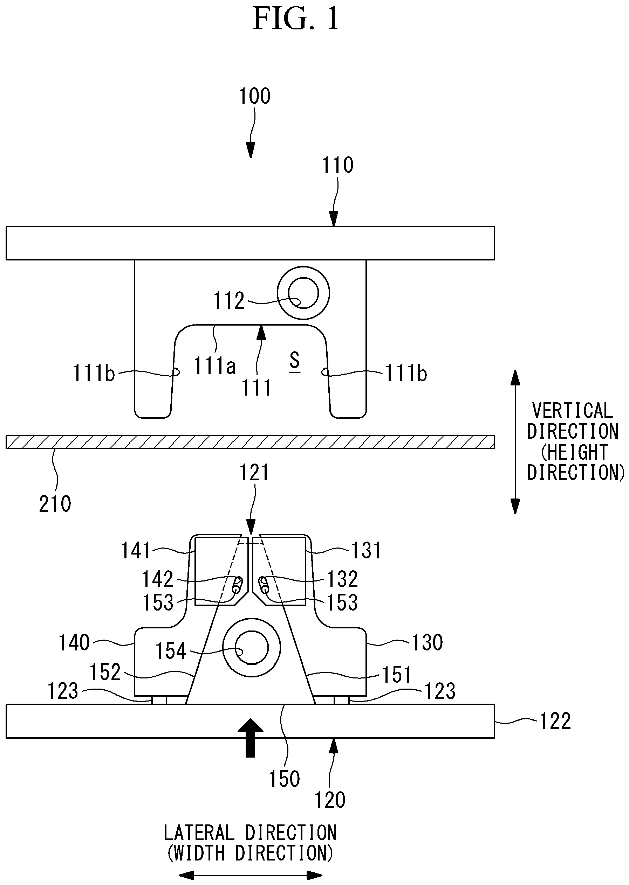

One embodiment of the present disclosure will be described below with reference to Fig. 1 to Fig. 6.

Note that Fig. 7 to Fig. 9 are diagrams illustrating a forming device 600 according to a conventional example.

### [Summary of Forming Device]

A forming device 100 is a device that forms a material 210 into a member (a formed component) 220 having a predetermined cross-sectional shape.

The material 210 is, for example, a plate material made of a thermoplastic composite material such as fiber reinforced resin containing a thermoplastic resin (for example, CFRTP or GFRTP) .

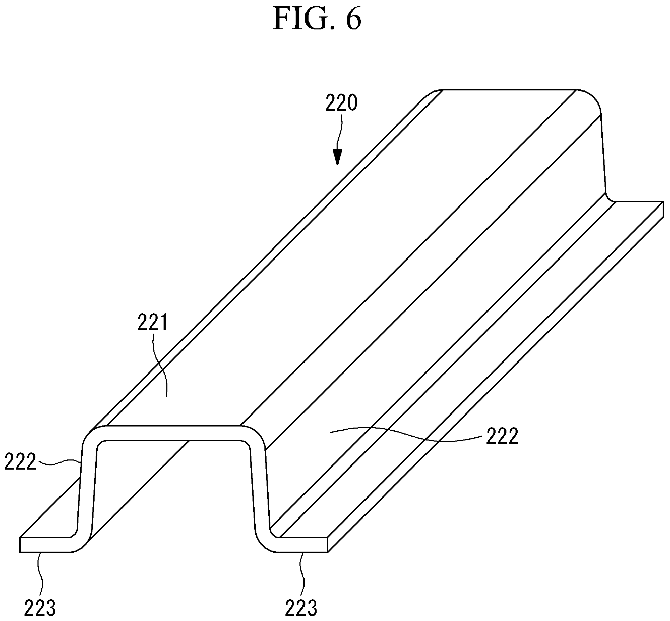

As illustrated in Fig. 6, the member 220 formed by the forming device 100 is, for example, a long member having a hat-shaped cross-sectional shape and having a web 221 extending in a lateral direction, flanges 222 vertically arranged downward from two opposing sides of the web 221, and arms 223 extending in the lateral direction from respective flanges 222.

Note that the cross-sectional shape of the member 220 is not limited to a hat shape and may be, for example, a C-shape having one web 221 and two flanges 222 or an L-shape having one web 221 and one flange 222.

In the following description, however, the description will be provided for a case where the member 220 having a hat-shaped cross-sectional shape is formed.

As illustrated in Fig. 1, the forming device 100 includes a die 110 and a punch 120.

A concave part 111 recessed in a U-shape is formed in the die 110. The punch 120 has a convex part 121 protruding in a U-shape.

The die 110 and the punch 120 extend in the depth direction orthogonal to the height direction and the width direction described later.

The die 110 and the punch 120 are formed so as to come close to and separate away from each other in a vertical direction (a predetermined direction).

In the case of the forming device 100 illustrated in Fig. 1, the punch 120 arranged below the die 110 is moved in the vertical direction to come close to and separate away from the die 110.

Note that the "vertical direction" as used herein matches the height direction of the die 110, the punch 120, and the member 220. Further, the "vertical direction" does not necessarily mean the actual vertical direction (perpendicular direction) and is used for expressing a relative direction of the forming device 100.

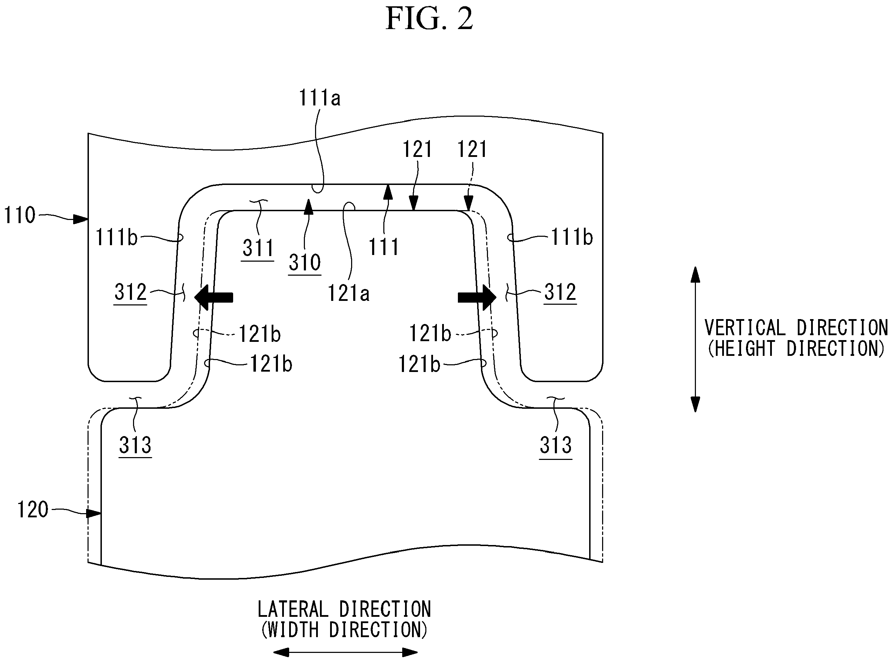

As illustrated in Fig. 2, when the die 110 and the punch 120 are closest to each other in the vertical direction, the convex part 121 is fitted into a space S (see Fig. 1) inside the concave part 111. At this time, a clearance 310 is defined between the concave part 111 and the convex part 121.

The cross-sectional shape of the clearance 310 is a hat shape.

Specifically, the clearance 310 has a web clearance (a bottom clearance) 311 extending in the lateral direction, flange clearances (side clearances) 312 vertically arranged downward from two opposing side of the web clearance 311, and arm clearances 313 extending in the lateral direction from respective flange clearances 312.

The clearance 310 extends in the depth direction while the hat-shaped cross-sectional shape is maintained.

Note that the cross-sectional shape of the clearance 310 is not limited to a hat shape and may be, for example, a C-shape having one web clearance 311 and two flange clearances 312 or an L-shape having one web clearance 311 and one flange clearance 312.

The cross-sectional shape of the clearance 310 defined as described above approximately matches a targeted cross-sectional shape of the member 220.

In the present embodiment, the convex part 121 is fitted into the concave part 111 and, in this state, can be deformed so as to come close to the concave part 111 in the lateral direction (orthogonal direction) orthogonal to the vertical direction.

Specifically, when the convex part 121 expands in the lateral direction, a side face 121b of the convex part 121 comes close to a side face 111b of the concave part 111 while the spacing between a bottom face 111a of the concave part 111 and a top face 121a of the convex part 121 is maintained.

In Fig. 2, the contour of the convex part 121 before deformation is illustrated by a solid line, and the contour of the convex part 121 after deformation is illustrated by a two-dot chain line.

Note that the "lateral direction" as used herein matches the width direction of the die 110, the punch 120, and the member 220 described later.

Accordingly, the spacing of each flange clearance 312 out of the web clearance 311, the flange clearances 312, and the arm clearances 313 of the clearance 310 will be reduced compared to that before the deformation of the convex part 121.

The cross-sectional shape of the clearance 310 defined as described above matches the targeted cross-sectional shape of the member 220.

Thus, the clearance 310, which has approximately matched the targeted cross-sectional shape before deformation of the convex part 121, will match the targeted cross-sectional shape after the deformation of the convex part 121.

In other words, the spacing of each flange clearance 312 is wider than the spacing of the flange clearance 312 corresponding to the targeted cross-sectional shape in a state before the convex part 121 expands in the lateral direction, and the spacing of each flange clearance 312 matches the spacing of the flange clearance 312 corresponding to the targeted cross-sectional shape in a state after the convex part 121 expands in the lateral direction.

### [Detail of Punch]

The punch 120 having the convex part 121 that deforms is configured as follows, for example.

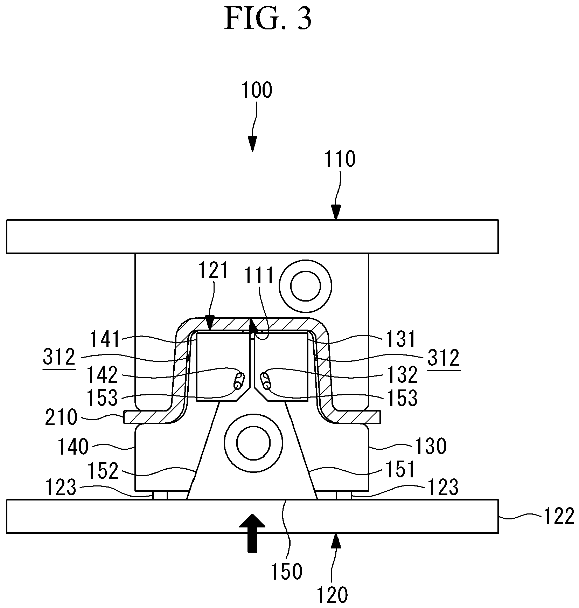

As illustrated in Fig. 1 and Fig. 3, the punch 120 has a first movable punch 130 and a second movable punch 140 as movable parts. Furthermore, the punch 120 has a base 122, a spring (a pushing member) 123, and a pedestal 150.

The first movable punch 130 is a member forming the right half portion of the convex part 121 (in detail, the right side of the top face 121a and the right side face 121b). The first movable punch 130 is a member having substantially an L-shape whose lower part protrudes to the right.

The second movable punch 140 is a member forming the left half part of the convex part 121 (in detail, the left side of the top face 121a and the left side face 121b). The second movable punch 140 is a member having substantially an L-shape whose lower part protrudes to the left.

The first movable punch 130 and the second movable punch 140 are shaped symmetrically in the lateral direction, for example, and are installed on the base 122 via the spring 123 with the backsides thereof facing each other.

The first movable punch 130 and the second movable punch 140 installed on the base 122 shape a single convex part 121 (the top face 121a and the two side faces 121b). In other words, the convex part 121 is divided into the first movable punch 130 and the second movable punch 140 in the lateral direction.

The pedestal 150 is provided between the first movable punch 130 and the second movable punch 140.

The pedestal 150 is a member having a first slope face (a guide mechanism) 151 and a second slope face (a guide mechanism) 152 and shaped in a trapezoid which is symmetrical in the lateral direction and has the bottom side longer than the top side.

The pedestal 150 is fixed to the base 122 at the bottom side.

The first movable punch 130 is slidable along the first slope face 151.

The first movable punch 130 is pushed in a direction away from the base 122 in the vertical direction by the spring 123.

The second movable punch 140 is slidable along the second slope face 152.

The second movable punch 140 is pushed in a direction away from the base 122 in the vertical direction by the spring 123.

A first guide plate 131 is attached to the first movable punch 130.

The first guide plate 131 is a plate material attached to the front of the first movable punch 130.

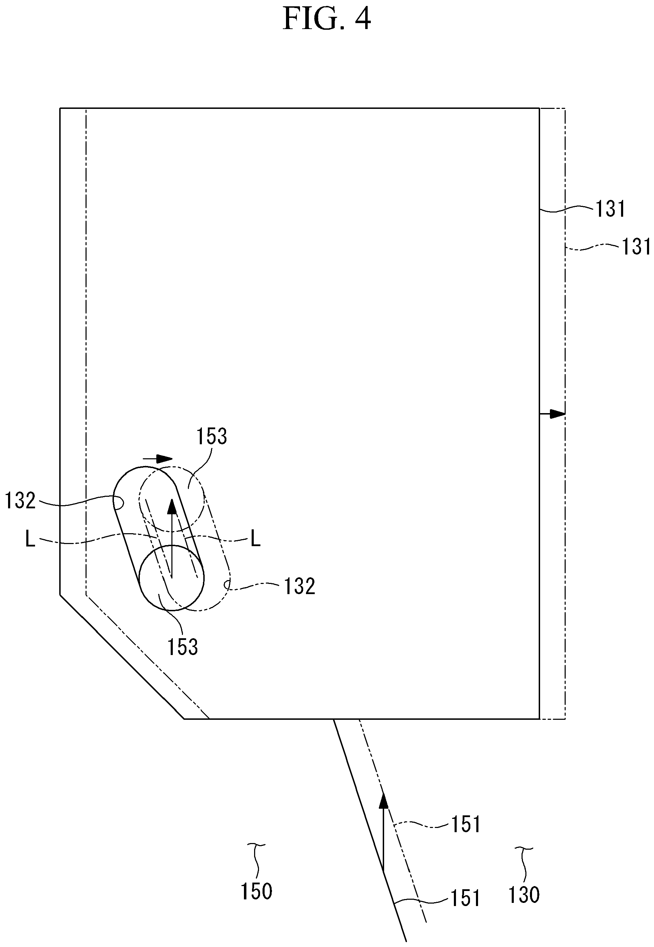

As illustrated in Fig. 4, a guide hole (a guide mechanism) 132 that is a slot is formed in the first guide plate 131.

The guide hole 132 is formed at an angle so as to be parallel to the first slope face 151 of the pedestal 150. Specifically, the guide hole 132 is formed such that a line L connecting the center of one of the arcs forming the slot to the center of the other arc is parallel to the first slope face 151.

A protrusion (a guide mechanism) 153 such as a pin fixed to the front of the pedestal 150 is inserted through the guide hole 132.

The protrusion 153 is fixed to the pedestal 150 and thus does not move relatively to the pedestal 150.

On the other hand, the protrusion 153 is movable along the guide hole 132 formed in the first guide plate 131. Thus, the protrusion 153 is movable relatively to the first guide plate 131 (and thus the first movable punch 130) within a range of the guide hole 132.

In such a configuration, the relative movement of the first movable punch 130 and the base 122 pushed in a direction away from each other is restricted when the lower end of the guide hole 132 and the protrusion 153 come into contact with each other. Thus, the position where the first movable punch 130 and the base 122 are farthest from each other in the vertical direction is determined.

Note that the position where the first movable punch 130 and the base 122 are farthest from each other in the vertical direction may be determined by a stripper bolt (not illustrated) inserted through the spring 123 and having a thread screwed in the first movable punch 130 or the base 122.

When the pedestal 150 fixed to the base 122 is pushed toward the first movable punch 130 side, the first movable punch 130 moves to the right with respect to the base 122 while sliding along the first slope face 151 of the pedestal 150 and the guide hole 132 of the first guide plate 131.

At this time, the relative movement of the first movable punch 130 and the base 122 is restricted when the upper end of the guide hole 132 and the protrusion 153 come into contact with each other. Thus, the position where the first movable punch 130 and the base 122 are closest to each other in the vertical direction is determined.

Note that the position where the first movable punch 130 and the base 122 are closest to each other in the vertical direction may be determined by direct contact between the first movable punch 130 and the base 122.

The same configuration as the first movable punch 130 is employed for the second movable punch 140, and an operation symmetrical in the lateral direction with the first movable punch 130 is performed. Thus, the detailed description of the second movable punch 140 will be omitted.

Note that the second guide plate 141 and the guide hole 142 of the second movable punch 140 correspond to the first guide plate 131 and the guide hole 132 of the first movable punch 130. Further, the protrusion 153 inserted through the guide hole 142 is different from the protrusion 153 inserted through the guide hole 132.

A predetermined initial load is set for the spring 123, and unless a load above a certain value works thereon, the first movable punch 130 and the second movable punch 140 are maintained to be farthest from the base 122 and do not come close thereto. The detail of the initial load will be described later.

In the punch 120 having the first movable punch 130 and the second movable punch 140 configured as described above, unless the pedestal 150 fixed to the base 122 is pushed toward the first movable punch 130 and the second movable punch 140 side, the first movable punch 130 and the second movable punch 140 are in a state of being close to each other.

Further, when the pedestal 150 fixed to the base 122 is pushed toward the first movable punch 130 and the second movable punch 140 side, the first movable punch 130 and the second movable punch 140 separate away from each other to form a state where the convex part 121 is expanded in the lateral direction.

Deformation of the convex part 121 can be realized by such movement of the first movable punch 130 and the second movable punch 140.

Note that, instead of the pedestal 150 being pushed toward the first movable punch 130 and the second movable punch 140 side, the first movable punch 130 and the second movable punch 140 may be pushed toward the base 122 side.

Note that, as a mechanism for expanding the convex part 121 in the lateral direction, the following mechanism other than the above example may be employed.

An actuator that expands and contracts in the lateral direction may be provided between the first movable punch 130 and the second movable punch 140, and the first movable punch 130 and the second movable punch 140 may be caused to come close to and separate away from each other as needed.

Further, each shape of the concave part 111 of the die 110, the first movable punch 130, and the second movable punch 140 may be suitably changed in accordance with the targeted cross-sectional shape of the member 220.

For example, the first movable punch 130 and the second movable punch 140 may be shaped asymmetrically in the lateral direction, and the concave part 111 of the die 110 may be shaped to correspond to the shape of the first movable punch 130 and the second movable punch 140.

Further, as a member that causes the first movable punch 130 and the second movable punch 140 to separate away from the base 122, a member other than the spring 123 may be employed.

For example, the first movable punch 130 and the second movable punch 140 may be connected to a shaft separate from the shaft used for moving the base 122 and the die 110, and the separate shaft may be used to move the first movable punch 130 and the second movable punch 140 when the material 210 reaches the bottom of the concave part 111.

### [Forming Method]

First, as illustrated in Fig. 1, the material 210 is set between the die 110 and the punch 120.

Next, the material 210 is heated to form a state where the thermoplastic resin contained in the material 210 is in a melted (softened) state. Then, as illustrated in Fig. 3, the base 122 is moved, thereby the punch 120 is caused to come close to the die 110, and the convex part 121 is fitted into the concave part 111 until the material 210 reaches the bottom face 111a of the concave part 111. At this time, the cross-sectional shape of the material 210 is gradually deformed to a hat shape from the linear shape (in a shaping step).

Note that, when the material 210 reaches the bottom of the concave part 111, the punch 120 and the die 110 are closest to each other in the vertical direction to form a state where the convex part 121 is fully fitted into the concave part 111.

In this shaping step, a state where the first movable punch 130 and the second movable punch 140 are close to each other is maintained. This is a state where the convex part 121 is narrowed without being expanded in the lateral direction and therefore is a state where the spacing of respective flange clearances 312 is wider than the spacing of the flange clearance 312 corresponding to the targeted cross-sectional shape.

Accordingly, the material 210 present in the flange clearance 312 is less likely to be narrowed, and it is therefore possible to reduce a phenomenon that an unbalance distribution of the resin occurs and the plate thickness becomes uneven in the shaped material 210.

To exert the above effect, it is required to avoid that the first movable punch 130 and the second movable punch 140 separate away from each other and the convex part 121 expands in the lateral direction at least in the shaping step.

To address this, the initial load of the spring 123 is set such that the first movable punch 130 and the second movable punch 140 bear against the counter force received from the material 210 in the shaping step. Specifically, the initial load of the spring 123 is set such that the first movable punch 130 and the second movable punch 140 bear against the counter force received from the material 210 until the punch 120 comes close to the die 110 and the material 210 reaches the bottom face 111a of the concave part 111 with the material 210 being interposed.

Note that the term "bear against" as used herein means that the spring 123 is not contracted by a load.

Accordingly, the state where the first movable punch 130 and the second movable punch 140 are farthest from the base 122 is maintained at least in the shaping step. Thus, even when the base 122 is pushed in and causes the punch 120 to come close to the die 110, the pedestal 150 fixed to the base 122 will not be pushed in the first movable punch 130 and the second movable punch 140 side at least in the shaping step.

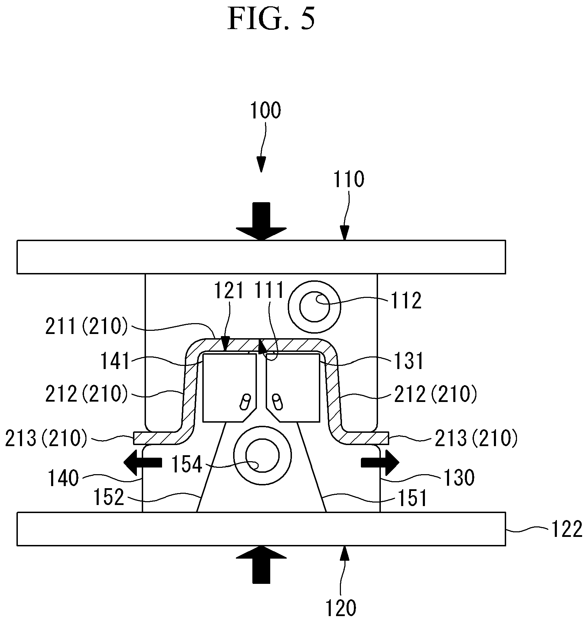

As illustrated in Fig. 5, when the material 210 reaches the bottom of the concave part 111 and the shaping step is completed, the base 122 is further pushed toward the first movable punch 130 and the second movable punch 140 side. At this time, the spring 123 is contracted for the first time.

In response, the pedestal 150 is pushed toward the first movable punch 130 and the second movable punch 140 side, and the first movable punch 130 and the second movable punch 140 separate from each other, and the convex part 121 expands in the lateral direction.

Further, the top side of the pushed pedestal 150 is flushed with the top face of the first movable punch 130 and the top face of the second movable punch 140 to form the top face 121a (see Fig. 2) of the convex part 121.

The convex part 121 expands in the lateral direction, thereby the spacing of each flange clearance 312 matches the spacing of the flange clearance 312 corresponding to the targeted cross-sectional shape, and a flange corresponding part 212 of the material 210 is pressed (in a pressing step).

Note that it is apparent that, when the base 122 is pushed in after the shaping step, a web corresponding part 211 is pressed by the pedestal 150, the first movable punch 130, and the second movable punch 140, and arm corresponding parts 213 are pressed by the first movable punch 130 and the second movable punch 140.

The web corresponding part 211 is a portion serving as the web 221 of the member 220 after forming of the material 210, the flange corresponding part 212 is a portion serving as the flange 222 of the member 220 after forming of the material 210, and the arm corresponding part 213 is a portion serving as the arm 223 of the member 220 after forming the material 210.

The term "press" as used herein does not mean applying a pressure to the material 210 for shaping but means applying a pressure to the material 210 for densifying prepreg interlayer and intralayer resins.

Upon completion of the pressing step, the material 210 at a high temperature is cooled to cure the thermoplastic resin (in a cooling step).

The cooling method may be an air-cooling scheme to leave the material 210 in the air or may be a scheme to pass a fluid through a flow channel 112 formed in the die 110 and a flow channel 154 formed in the pedestal 150 (for example, a water cooling scheme), for example, and can be suitably selected in accordance with a required cooling rate.

As set forth, the member 220 is formed from the material 210 via the shaping step, the pressing step, and the cooling step.

Note that the movable part of the convex part 121 is not limited to the form of the first movable punch 130 and the second movable punch 140 described above and may be configured such that the side face 121b of the convex part 121 comes close to the side face 111b of the concave part 111 with the convex part 121 being fitted into the concave part 111.

In the present embodiment, the following advantageous effects are achieved.

Since the convex part 121 has movable parts (for example, the first movable punch 130 and the second movable punch 140) that come close to the concave part 111 in the lateral direction with the convex part 121 being fitted into the concave part 111, the flange clearance 312 can be taken wider than the spacing of the flange clearance 312 corresponding to the targeted cross-sectional shape until the clearance 310 corresponding to the intended shape is defined between the concave part 111 and the convex part 121. Accordingly, the material 210 (flange corresponding part 212) present in the flange clearance 312 is less likely to be narrowed, and it is therefore possible to reduce a phenomenon that an unbalance distribution of the resin occurs in the shaped material 210 and the plate thickness becomes uneven.

Further, by causing the movable part to come close to the concave part 111 after the convex part 121 is fully fitted into the concave part 111, it is possible to press the shaped material 210 not only in the vertical direction but also in the lateral direction. Accordingly, it is possible to suitably press not only the web corresponding part 211 or the arm corresponding parts 213 of the material 210 but also the two flange corresponding parts 212.

As set forth, good quality of the material 210 (member 220) after shaped and pressed can be achieved.

Further, the punch 120 has the base 122 on which the first movable punch 130 and the second movable punch 140 are installed, the spring 123 that pushes the first movable punch 130 and the second movable punch 140 and the base 122 so that the first movable punch 130 and the second movable punch 140 relatively separate away from the base 122 in the vertical direction, and a guide mechanism (the first slope face 151, the second slope face 152, the guide holes 132, 142, and the protrusion 153) that moves the first movable punch 130 and the second movable punch 140 to separate away from each other along with the operation of the first movable punch 130 and the second movable punch 140 coming close to the base 122 by the counter force received from the material 210, and thus, the first movable punch 130 and the second movable punch 140 can be caused to come close to and separate away from each other by using the guide mechanism.

Further, since the initial load, which bears against the counter force received by the first movable punch 130 and the second movable punch 140 from the material 210 until the die 110 and the punch 120 are closest with the material 210 being interposed, is set for the spring 123, it is possible to prevent the first movable punch 130 and the second movable punch 140 from pressing the material 210 in the shaping step.

Note that, although the material 210 containing a thermoplastic resin has been described as an example in the above embodiment, the material 210 may contain a thermosetting resin. Further, the material 210 may be non-crimp fabric (NCF) .

When the material 210 containing a thermoplastic resin is used, the material 210 is heated up to a softening temperature (lower than the curing temperature) before the shaping step and then heated up to the curing temperature (higher than the softening temperature) after the shaping.

Further, in a case of NFC, no heating is performed before the shaping step, and heating is performed at a timing of resin injection after the shaping step (in detail, a heated resin is injected).

The forming device and the forming method according to the present embodiment as described above are recognized as follows, for example.

A forming device (100) according to one aspect of the present disclosure is a forming device for forming a material (210) containing a resin. The forming device includes: a die (110) having a concave part (111); and a punch (120) having a convex part (121) to be fitted into the concave part, the die and the punch are configured to come close to and separate away from each other in a predetermined direction, and the convex part has movable parts (130, 140) configured to come close to the concave part in an orthogonal direction orthogonal to the predetermined direction with the punch and the die being close to each other and the convex part being fitted into the concave part.

According to the forming device of the present aspect, since the forming device includes the die having the concave part and the punch having the convex part to be fitted into the concave part, the die and the punch can come close to and separate away from each other in the predetermined direction, and the convex part has the movable parts configured to come close to the concave part in the orthogonal direction orthogonal to the predetermined direction in a state where the convex part is fitted into the concave part and the punch and the die are closest to each other and where the punch and the die are close to each other and the convex part is fitted into the concave part, the clearance in the orthogonal direction between the concave part and the convex part can be taken wider than the predetermined clearance until the clearance (predetermined clearance) corresponding to the intended shape is defined between the concave part and the convex part. Accordingly, the material present in a region in the orthogonal direction is less likely to be narrowed, and it is therefore possible to reduce a phenomenon that an unbalance distribution of the resin occurs in the shaped material and the plate thickness becomes uneven.

Further, by causing the movable part to come close to the concave part after the punch and the die are closest and the convex part is fully fitted into the concave part, it is possible to press the shaped material not only in the predetermined direction but also in the orthogonal direction. Accordingly, when forming a hat-shaped or C-shaped member having a web and opposing flanges, for example, it is possible to suitably press not only the web of the material but also the two flanges.

As set forth, good quality of the material (member/ formed component) after shaped and pressed can be achieved.

Note that, an example of the resin may be a resin having fluidity or flexibility at least during shaping, such as a thermoplastic resin or a thermosetting resin.

Further, in the forming device according to one aspect of the present disclosure, the movable part includes a first movable punch (130) and a second movable punch (140) configured to come close to and separate away from each other in the orthogonal direction, the convex part is shaped by the first movable punch and the second movable punch, and the first movable punch and the second movable punch separate away from each other with the punch and the die being close to each other and the convex part being fitted into the concave part.

According to the forming device of the present aspect, since the movable part includes the first movable punch and the second movable punch that can come close to and separate away from each other in the orthogonal direction, the convex part is shaped by the first movable punch and the second movable punch, and the first movable punch and the second movable punch separate away from each other with the punch and the die being close to each other and the convex part being fitted into the concave part, it is possible to take the clearance in the orthogonal direction between the concave part and the convex part wider than the predetermined clearance by causing the first movable punch and the second movable punch to come close to each other. Further, by causing the first movable punch and the second movable punch to separate away from each other, it is possible to press the shaped material not only in the predetermined direction but also in the orthogonal direction.

Further, in the forming device according to one aspect of the present disclosure, the first movable punch and the second movable punch are configured to separate away from each other by counter force received from the material.

According to the forming device of the present aspect, since the first movable punch and the second movable punch are configured to separate away from each other by counter force received from the material, there is no need for separately providing an actuator used solely for causing the first movable punch and the second movable punch to come close to and separate away from each other. Thus, the configuration as a forming device can be simplified.

Further, in the forming device according to one aspect of the present disclosure, the punch has a base (122) on which the first movable punch and the second movable punch are installed, a pushing member (123) configured to push the first movable punch and the second movable punch and the base so that the first movable punch and the second movable punch separate away from the base in the predetermined direction, and a guide mechanism (151, 152, 132, 142, 153) configured to move the first movable punch and the second movable punch to separate away from each other along with movement of the first movable punch and the second movable punch coming close to the base by the counter force received from the material.

According to the forming device of the present aspect, since the punch has the base on which the first movable punch and the second movable punch are installed, the pushing member configured to push the first movable punch and the second movable punch and the base so that the first movable punch and the second movable punch separate away from the base in the predetermined direction, and the guide mechanism configured to move the first movable punch and the second movable punch to separate away from each other along with movement of the first movable punch and the second movable punch coming close to the base by the counter force received from the material, the first movable punch and the second movable punch can be caused to come close to and separate away from each other by the guide mechanism, and there is no need for separately providing an actuator used solely for causing the first movable punch and the second movable punch to come close to and separate away from each other. Thus, the configuration as a forming device can be simplified.

An example of the pushing member may be, for example, an elastic member such as a spring.

Further, in the forming device according to one aspect of the present disclosure, an initial load is set for the pushing member, and the initial load bears against the counter force received from the material by the first movable punch and the second movable punch until the die and the punch are closest to each other with the material being interposed.

According to the forming device of the present aspect, since the initial load, which bears against the counter force received from the material by the first movable punch and the second movable punch until the die and the punch are closest to each other with the material being interposed, is set for the pushing member, it is possible to prevent the first movable punch and the second movable punch from pressing the material in the shaping step of deforming the material into a predetermined sectional shape.

Further, in the forming device according to one aspect of the present disclosure, the sectional shape of a clearance (310) defined by the concave part and the convex part has a bottom clearance (311) and side clearances (312) vertically arranged from two opposing sides of the bottom clearance, the predetermined direction substantially match a direction in which the side clearances are vertically arranged, and the orthogonal direction substantially match a direction in which the side clearances face each other.

Further, a forming method according to one aspect of the present disclosure is a forming method for forming a material containing a resin into a member having a predetermined sectional shape by using a forming device having a die having a concave part, and a punch having a convex part to be fitted into the concave part, the die and the punch are configured to come close to and separate away from each other in a predetermined direction, and the convex part has a movable part configured to come close to the concave part in an orthogonal direction orthogonal to the predetermined direction. The forming method includes steps of: causing the punch and the die to come close to each other with the material being interposed between the punch and the die; and defining a predetermined clearance corresponding to the sectional shape between the concave part and the convex part by causing the movable part to come close to the concave part when the material reaches the bottom of the die.

Further, in the forming method according to one aspect of the present disclosure, the movable part includes a first movable punch and a second movable punch configured to come close to and separate away from each other in the orthogonal direction, the convex part is shaped by the first movable punch and the second movable punch, and the step of defining the predetermined clearance defines the predetermined clearance corresponding to the sectional shape between the concave part and the convex part by causing the first movable punch and the second movable punch to separate away from each other when the material reaches the bottom of the die.

### [List of References]

- 100: forming device
- 110: die
- 111: concave part
- 111a: bottom face
- 111b: side face
- 112: flow channel
- 120: punch
- 121: convex part
- 121a: top face
- 121b: side face
- 122: base
- 123: spring (pushing member)
- 130: first movable punch (movable part)
- 131: first guide plate
- 132: guide hole
- 140: second movable punch (movable part)
- 141: second guide plate
- 142: guide hole
- 150: pedestal
- 151: first slope face
- 152: second slope face
- 153: protrusion
- 154: flow channel
- 210: material
- 211: web corresponding part
- 212: flange corresponding part
- 213: arm corresponding part
- 220: member (formed component)
- 221: web
- 222: flange
- 223: arm
- 310: clearance
- 311: web clearance (bottom clearance)
- 312: flange clearance (side clearance)
- 313: arm clearance

## Claims

1. A forming device for forming a material containing a resin, the forming device comprising:
a die having a concave part; and
a punch having a convex part to be fitted into the concave part,
wherein the die and the punch are configured to come close to and separate away from each other in a predetermined direction, and
wherein the convex part has a movable part configured to come close to the concave part in an orthogonal direction orthogonal to the predetermined direction with the punch and the die being close to each other and the convex part being fitted into the concave part.

2. The forming device according to claim 1,
wherein the movable part includes a first movable punch and a second movable punch configured to come close to and separate away from each other in the orthogonal direction,
wherein the convex part is shaped by the first movable punch and the second movable punch, and
wherein the first movable punch and the second movable punch separate away from each other with the punch and the die being close to each other and the convex part being fitted into the concave part.

3. The forming device according to claim 2, wherein the first movable punch and the second movable punch are configured to separate away from each other by counter force received from the material.

4. The forming device according to claim 3,
wherein the punch has
a base on which the first movable punch and the second movable punch are installed,
a pushing member configured to push the first movable punch and the second movable punch and the base so that the first movable punch and the second movable punch separate away from the base in the predetermined direction, and
a guide mechanism configured to move the first movable punch and the second movable punch to separate away from each other along with movement of the first movable punch and the second movable punch coming close to the base by counter force received from the material.

5. The forming device according to claim 4, wherein an initial load is set on the pushing member, and the initial load bears against the counter force received from the material by the first movable punch and the second movable punch until the die and the punch are closest to each other with the material being interposed.

6. The forming device according to any one of claims 1 to 5,
wherein a sectional shape of a clearance defined by the concave part and the convex part has a bottom clearance and side clearances vertically arranged from two opposing sides of the bottom clearance,
wherein the predetermined direction substantially matches a direction in which the side clearances are vertically arranged, and
wherein the orthogonal direction substantially match a direction in which the side clearances face each other.

7. A forming method for forming a material containing a resin into a member having a predetermined sectional shape by using a forming device including
a die having a concave part, and
a punch having a convex part to be fitted into the concave part,
wherein the die and the punch are configured to come close to and separate away from each other in a predetermined direction, and
wherein the convex part has a movable part configured to come close to the concave part in an orthogonal direction orthogonal to the predetermined direction,
the forming method comprising steps of:
causing the punch and the die to come close to each other with the material being interposed between the punch and the die; and
defining a predetermined clearance corresponding to the sectional shape between the concave part and the convex part by causing the movable part to come close to the concave part when the material reaches a bottom of the die.

8. The forming method according to claim 7,
wherein the movable part includes a first movable punch and a second movable punch configured to come close to and separate away from each other in the orthogonal direction,
wherein the convex part is shaped by the first movable punch and the second movable punch, and
wherein the step of defining the predetermined clearance defines the predetermined clearance corresponding to the sectional shape between the concave part and the convex part by causing the first movable punch and the second movable punch to separate away from each other when the material reaches the bottom of the die.
